# EUROPEAN PATENT APPLICATION

(11) **EP 2 314 919 A2**
(43) Date of publication of application: **27.04.2011**
(21) Application number: 10188233.0
(22) Date of filing: 20.10.2010
(51) Int. Cl.: F23K 3/02, B65G 53/22, B65G 65/48, F27D 3/00, F27D 3/10, F27D 3/18

(54) **Tank for the dosage of solid fuel, particularly in industrial ovens**

(30) Priority: 21.10.2009 IT TV20090205
(71) Applicant: Fassa S.p.A., 31027 Spresiano (TV) (IT)
(72) Inventor: Mussato, Fausto, 31030, Arcade TV (IT)
(74) Representative: Modiano, Micaela Nadia

(57) **Abstract**

A tank (1) for the dosage of solid fuel, particularly in industrial ovens, comprising a first upper inlet (3) and a second upper inlet (4), respectively for the fuel and for air under pressure, a rotating internal scraper shaft (9) and a plurality of first lower outlets (23) for the pneumatic transfer of the fuel to supply ducts for the oven.

In the tank the scraper shaft (9) is hollow and is connected to a third inlet (20) for air under pressure and to one or more radial ducts (26), which are perforated and provided with a plurality of perforated vanes (11).

Below each of the first outlets (23) there is a dosage duct (26), i.e. a means for regulating the flow of fuel, on the lateral surface of which there is a nozzle (28) with mutually opposite holes (29) which is fed with air for fluidizing the fuel.

## Description

The present invention relates to a tank for the dosage of solid fuel, particularly in industrial ovens.

Nowadays systems are known, in particular for feeding lime ovens, which are constituted by a silo or holding tank, which contains solid fuel or "fines", such as for example sawdust, by a tank or weighing scale, which usually operates with an internal pressure of 900-1000 mbar, by an extraction system, which feeds the pneumatic fuel transport lines, and by a blower, which is adapted to produce the air to transport the "fines" or material shredded from discards or scraps.

Systems of known types are dimensioned to feed an oven with coal or with wood dust of a constant granulometry which originates from aspiration systems (typically in wood shops and sawmills) and which has a specific weight preferably of between 250-300 kg/m3 and a humidity of not greater than 6%.

In such systems of known type the fuel supply is never constant, making it necessary for the operator to carry out continual adjustments to the dosage parameters.

This also implies variations in the operating temperature of the oven, which translate to an uneven firing of the product, for example limestone.

If a mixture of wood, glue and specific fibres used in the furniture industry is used as the fuel, it has been found that these fibres have a specific weight that is rather lower than that of wood, with a consequent reduction in the specific weight of the "fines" of around 100 Kg/m3, i.e. a final specific weight of 150-200 Kg/m3.

This reduction in weight causes a difficulty in the extraction of the product from the tank and in its pneumatic transport to the oven.

The known system which uses this operating principle moreover does not provide the fuel with the necessary constancy. Further, when using discards or scraps, the quantities required by the cycle for a production of 500 tonnes/day of lime (around 1020 kg every 12 minutes, approximately) are not guaranteed.

The use of the fuel indicated moreover causes, inside the silos or during the various different transits, the formation of buildups of greater or lesser size which, in turn, obstruct the passage inside the pipes with a consequent reduction of the flow of material and therefore of the supply of the oven.

To partially solve this drawback the use is known, inside the tank, of a rotating shaft provided with scraper vanes (i.e. a scraper shaft) which protrude radially in proximity to the bottom on which exits, or loading inlets, are formed for the subsequent conveyance of the "fines".

With the tank brought under pressure, the sawdust, be it pure or constituted by fibres, still tends to consolidate, because the scraper shaft is not sufficient to keep the powder fluidified.

To partially solve this drawback the use is known of fluidification nozzles which are arranged in the loading inlets that are located upstream of prearranged dosage ducts. Such nozzles however do not allow a constant extraction if the fragmentation of the solid fuel in the tank is not optimal.

Indeed, it has been found that in the known solutions, the tank manages to supply, although using a solid fuel of optimal quality composed of scraps and fibres in part 10-15% and high-quality wood for the remainder 85-90%, a still non-constant flow of material supplied to the oven, again owing to the thickening of the fuel in solid agglomerates.

The practical consequence of using this type of fuel is therefore not being able to even dose the quantities, even strictly necessary quantities, in order to sustain the minimum production of the oven.

All the above mentioned drawbacks make the adjustment of the thermal power of the burner difficult and complex, owing to the unstable flow of the fuel in the material pneumatic transport lines, and also owing to the compaction thereof.

As a consequence a further drawback arises which consists in an uneven heating of the product, such as for example lime.

The aim of the present invention is to solve the above-mentioned technical problems, eliminating the drawbacks in the cited known art, by providing a device that makes it possible to achieve an optimal fluidification of the fuel inside the tank and its optimal transfer to the oven.

Within this aim, an object of the invention is to provide a device that makes it possible to obtain an efficient adjustment of the flow of fuel.

Another object of the invention is to render the fuel that exits from the tank free from solid agglomerates which could obstruct the various different ducts.

Another object is to provide a device that is structurally simple and has a low cost.

This aim and these and other objects, which will become better apparent hereinafter, are achieved by a tank for the dosage of solid fuel, particularly in industrial ovens, comprising a first upper inlet and a second upper inlet, respectively for said fuel and for air under pressure, a rotating internal scraper shaft and a plurality of first lower outlets for the pneumatic transfer of said processed fuel to a loading inlet for said oven, characterized in that said scraper shaft is hollow and is connected to a third inlet for air under pressure and to one or more radial ducts, which are perforated and provided with a plurality of perforated vanes, a dosage duct being present below each of said first outlets, at least one nozzle with mutually opposite holes for fluidizing said fuel being present on the internal lateral surface of said dosage duct.

Further characteristics and advantages of the invention will become better apparent from the following detailed description of a particular embodiment, illustrated by way of non-limiting example in the accompanying drawings, wherein:
Figure 1 is an elevation view of a device according to the invention connected upstream and downstream to the system;
Figure 2 is a longitudinal sectional side view of the tank;

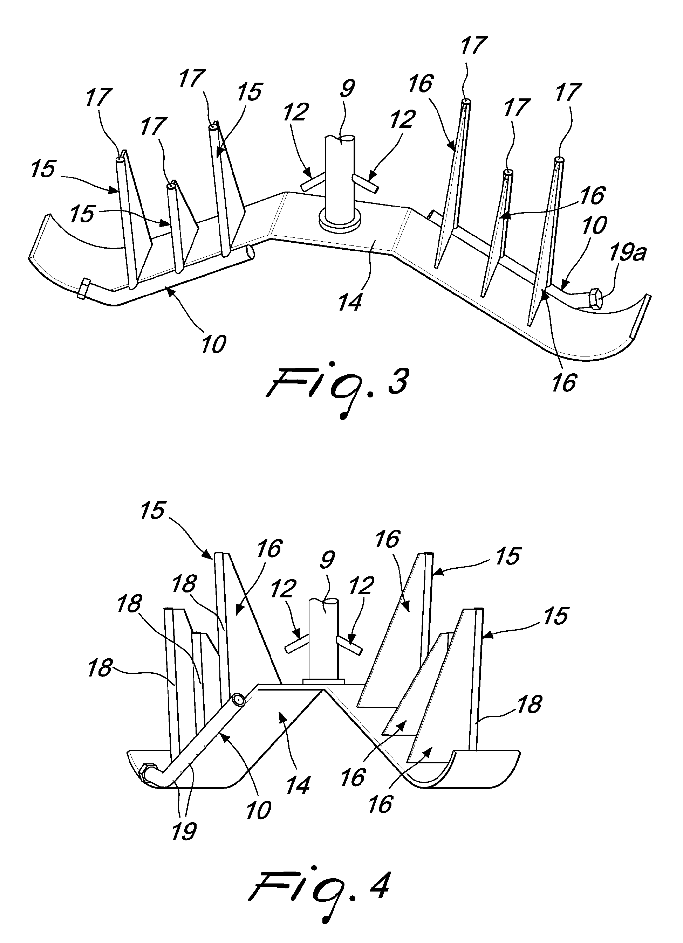

Figure 3 is a perspective top view of the perforated vanes of the rotating shaft;
Figure 4 is a perspective view of the perforated vanes of the rotating shaft;

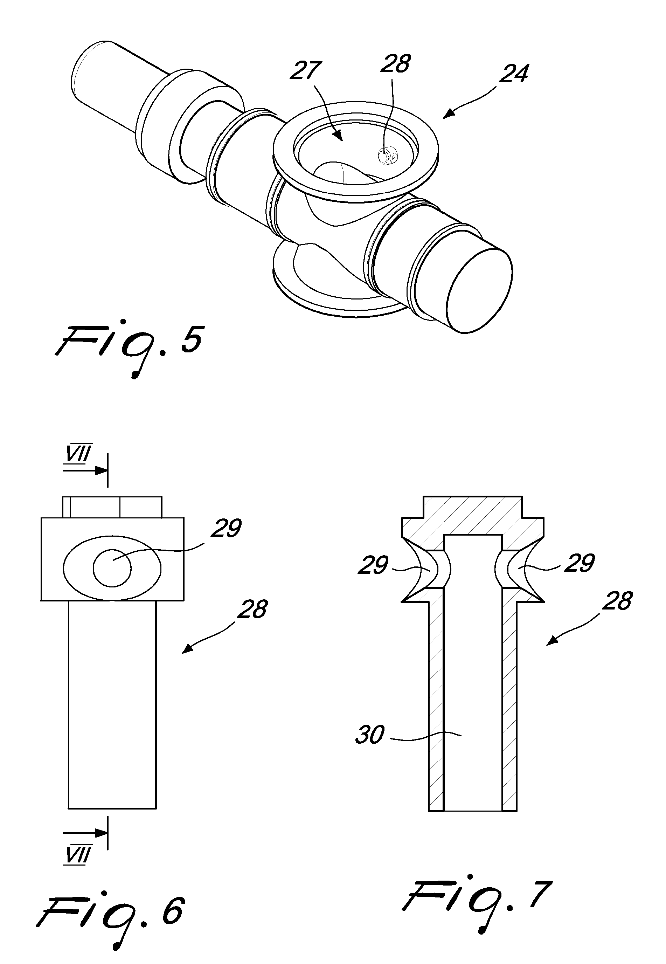

Figure 5 is a perspective view of the dosage duct with the nozzle;
Figure 6 is a side view of the nozzle;
Figure 7 is a sectional view of the nozzle, taken along the line V-V of Figure 5;

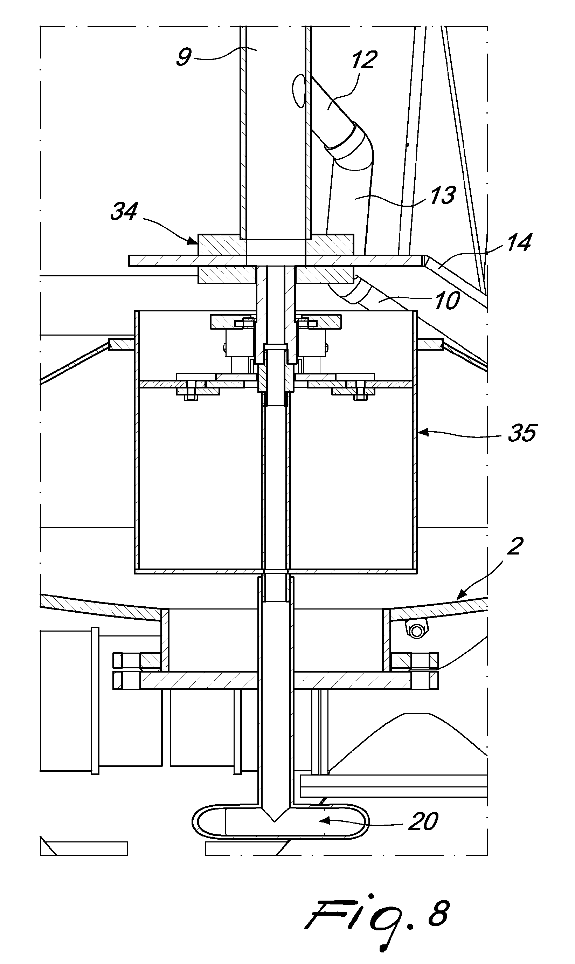

Figure 8 is a vertical sectional side view of the connection joint between the tank and the shaft.

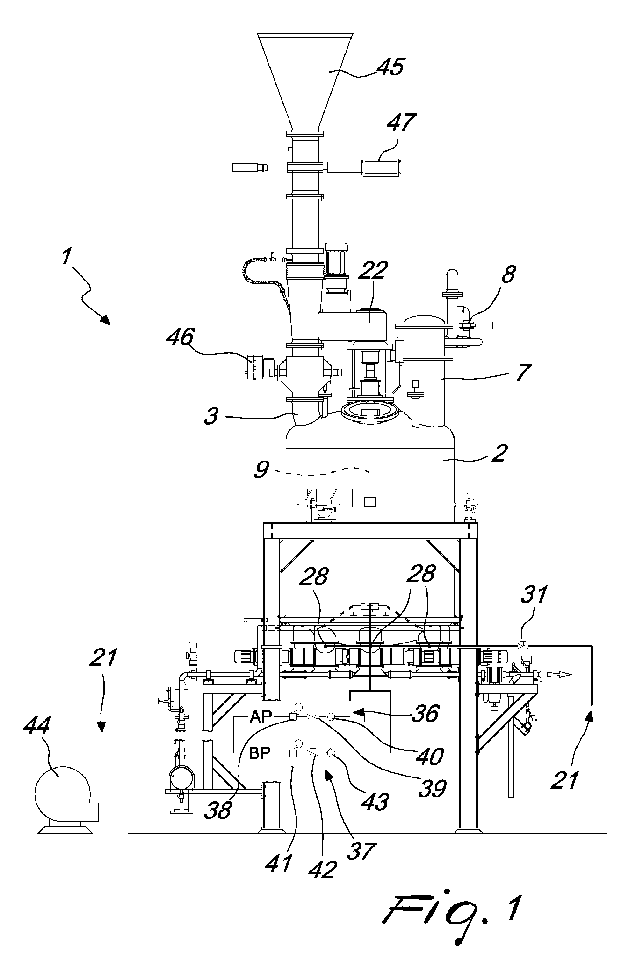

With reference to Figure 1, the reference numeral 1 generally designates a system for loading and dosing solid fuel for supplying an oven.

The reference numeral 2 designates a tank for containing and processing solid fuel, for example constituted by sawdust or scraps, or discards or wood items of any format originating from industries and/or wood shops and which are shredded until they reach the necessary characteristics for pneumatic transport.

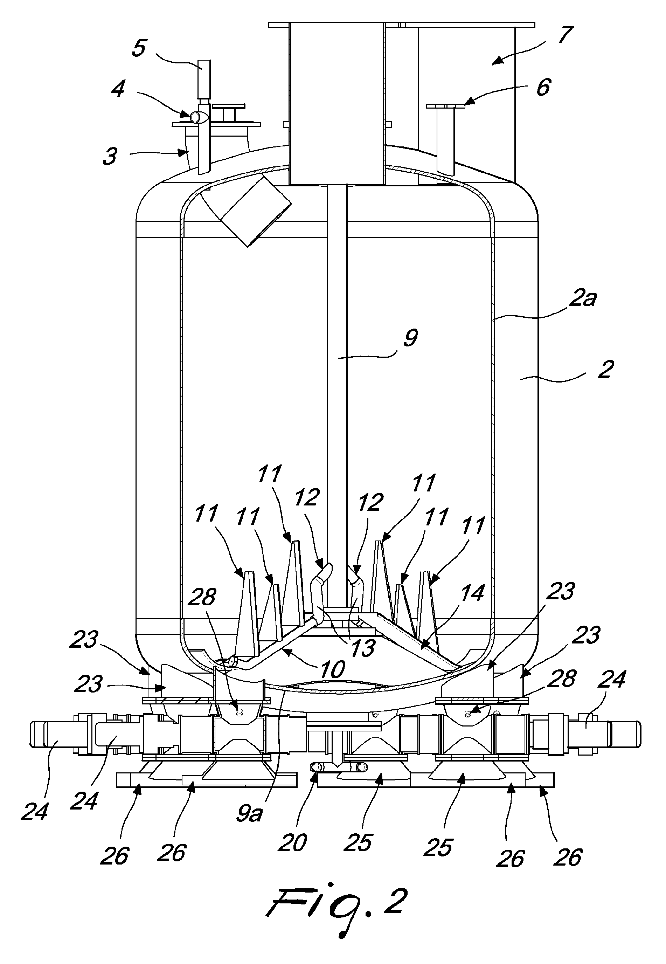

The tank 2, shown in Figure 2 as being cylindrical in shape, is arranged vertically and has an internal lateral surface 2a. Such tank comprises a first upper inlet 3 for the fuel and a second upper inlet 4 for air under pressure.

In an upper region the tank 2 has a safety valve 5, a pressure gauge connection 6 and a filter 7, connected in series with a depressurization lock 8.

Internally and axially with respect to the tank 2 a hollow rotating scraper shaft 9 is accommodated, with which at least one first manifold 12 and at least one blade 14 are jointly connected and from which they radially protrude, proximate to the bottom 9a. The at least one blade 14 extends towards the bottom with its tips.

The first manifold 12 is connected, by means of adapted sleeves 13, preferably made of rubber, to at least one first duct 10 which is fixed laterally or in an upper region to the blade 14 so as to follow its rotary motion.

One or more perforated vanes 11 are jointly connected to the first duct 10, protrude on the opposite side with respect to the bottom 9a, and are composed of a second perforated duct 15, from which a flat polygonal plate 16 protrudes by being coupled along one edge, with one side jointly connected to a generatrix of the second duct 15 and with the other side jointly connected to the plate 14.

The perforated vanes 11 are arranged preferably parallel to each other and to the internal lateral surface 2a of the tank 2.

The second perforated ducts 15 are arranged towards the first upper inlet 3 and are each provided with a first axial hole 17 located in the end face at the free tip and with second lateral holes 18 which face the adjacent plate 16 and are arranged alternately close to one end or the other end of the perforated ducts 15.

Third holes 19 are provided laterally to the surface of the first duct 10 and face the bottom 9a of the tank 2.

Fourth holes 19a are provided in the end face at the free tip of each first duct 10.

The tank 2 has, in a lower region, a third inlet 20 for connection between the scraper shaft 9 and a compressed air circuit 21, the scraper shaft 9 being connected in an upper region to a gear motor 22.

On the bottom 9a of the tank 2 there are first lower outlets 23, each of which is connected to a dosage duct 24 which has a conical shape with the vertex directed away from the bottom 9a and connected to a loading hopper 25 which in turn is connected to a supply duct 26 which leads to the oven.

A cylindrical nozzle 28 is associated with each dosage duct 24, on the lateral surface 27 on which the fuel is conveyed, and has two diverging conical and diametrically opposite holes 29, which direct the air onto the lateral surface 27, creating a vortical motion that strikes the fuel as it falls.

The nozzle 28 has a central duct 30 which is connected to the diverging conical holes 29 and to the compressed air circuit 21.

The flow-rate of air or gas in each nozzle 28 is adjusted by means of at least one first electric valve 31.

The scraper shaft 9 is connected to the compressed air circuit 21 by means of a flanged coupling 34, which locks the blade 14 in place and is connected to a rotary hermetic coupling 35.

The inflow of the air in the scraper shaft 9 is managed by a high-pressure control duct 36 which is connected in parallel to a low-pressure control duct 37, both of which are connected to the compressed air circuit 21.

The high-pressure control duct 36 has, in series, a second pressure regulator 38, a second electric valve 39 and a second check valve 40.

The low-pressure control duct 37 has, in series, a third pressure regulator 41, a third electric valve 42 and a third check valve 43.

The pressurisation of the tank occurs by means of a compressor or a blower 44, which is also connected to the second upper inlet 4, which also supplies the supply ducts 26.

The supply of the fuel to the tank 2 occurs by means of a second loading hopper 45 which lies above the tank 2 and is connected to the first upper inlet 3.

A hemispherical valve 46 and a guillotine valve 47 are interposed between the second loading hopper 45 and the tank 2.

The operation of the device according to the invention is as follows.

The solid fuel is loaded into the tank 2 through the second loading hopper 45 and the controlled opening of the hemispherical valve 46 and of the guillotine valve 47.

In this loading procedure the tank 2 is not pressurised thanks to the depressurization lock 8 which is open to the external environment.

The filter 7 prevents the solid fuel from exiting together with the air into the external environment during the depressurization phase.

The scraper shaft 9, during the fuel loading phase, is supplied with air at low pressure in order to prevent the first, second, third and fourth holes 17, 18, 19, 19a, on the perforated vanes 11 and on the radial ducts 10, from becoming clogged with fuel.

After fuel loading is concluded, inside the tank 2 the depressurization lock 8 is closed and the hemispherical valve 46 and the guillotine valve 47 are closed.

At this point the pressurisation of the air in the tank 2 is carried out, using the second upper inlet 4.

Air with a higher pressure than the air in the tank 2 is sent into the scraper shaft 9, which is put into rotation, and this air exits through the first, second, third and fourth holes 17, 18, 19, 19a, evening and fluidifying the fuel which is proximate to the bottom of the tank 2.

The perforated vanes 11 carry out a further task of mixing and breaking up the solid agglomerates thanks to the mechanical working of the plates 16 positioned on each blade 14.

The effect of rotation of the blade 14, which is jointly connected to the scraper shaft 9, combined with the presence of the perforated vanes 11 and the blowing of compressed air through the first, second and third holes 17, 18, 19 on the perforated vanes 11 and on the first duct 10 permit an effective fluidification and the breakup of any and all thickening or solid agglomerate inside the tank 2.

Each dosage duct 24, located and connected below the tank 2, has a nozzle 28 which is located on the convergent internal surface 27 in contact with the fuel.

The nozzle is provided with two diverging conical holes 29 which produce two air jets which are tangential to the convergent internal surface 27 and which each performs a semicircular trajectory until they meet in a region of the dosage duct 24 opposite to that of the nozzle 28.

The action of these air jets generated by each nozzle 28 is decisive in fluidifying, with air jets, the fuel in the first lower outlets 23 which is entering the dosage ducts 24.

The required flow of fuel, adequately fluidified and free from solid agglomerates, is thus pneumatically conveyed to the industrial oven by means of the supply ducts 26.

The lack of thickening and solid parts in the fuel thus makes it possible to supply the burner without irregularities and without having to make continual corrections, thus obtaining a steady combustion.

The system is therefore correctly dimensioned for supplying for example the oven up to around 95% of a maximum indicative flow of 5100 kg/h (1020 kg every twelve minutes) for a daily consumption of around 100 tonnes/day of sawdust for the production for example of 500 tonnes/day of lime.

Obviously the materials used as well as the dimensions constituting the individual components of the invention may be more relevant according to specific requirements.

The various different means for effecting certain different functions shall not in any way coexist only in the illustrated embodiment, but may be per se present in many embodiments, even if not illustrated.

The characteristics indicated as advantageous, advisable or similar may also be lacking or be substituted by equivalent characteristics.

The disclosures in Italian Patent Application No. TV2009A000205 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A tank (2) for the dosage of solid fuel, particularly in industrial ovens, comprising a first upper inlet (3) and a second upper inlet (4), respectively for said fuel and for air under pressure, a rotating internal scraper shaft (9) and a plurality of first lower outlets (23) for the pneumatic transfer of said processed fuel to a loading inlet for said oven, **characterized in that** said scraper shaft (9) is hollow and is connected to a third inlet (3) for air under pressure and to one or more radial ducts, which are perforated and provided with a plurality of perforated vanes (11), a dosage duct (24) being present below said plurality of first outlets (23), at least one nozzle (28) with mutually opposite holes for fluidizing said fuel being present on the internal lateral surface (27) of said dosage duct (24).

2. The tank according to claim 1, **characterized in that** a rotating hollow scraper shaft (9) is accommodated inside said tank axially thereto, at least one first manifold (12) and at least one blade (14) being jointly connected to, and protruding radially from, said shaft (9) proximate to the bottom (9a), said blade extending toward said bottom with its tips, said first manifold (12) being connected, by means of adapted sleeves (13) preferably made of rubber, to at least one first duct (10), which is fixed laterally or in an upper region to said blade (14) so as to follow its rotary motion.

3. The tank according to claims 1 and 2, **characterized in that** one or more perforated vanes (11) are jointly connected to said at least one first duct (10), protrude on the opposite side with respect to said bottom (9a), and are composed of at least one second perforated duct (15), from which a flat polygonal plate (16) protrudes by being coupled along one edge, with one side jointly connected to a generatrix of said second duct (15) and with the other side jointly connected to said plate (14).

4. The tank according to claims 1 and 3, **characterized in that** said perforated vanes (11) are arranged substantially parallel to each other and to the internal lateral surface (2a) of said tank (2).

5. The tank according to claims 1 and 4, **characterized in that** said at least one second perforated duct (15), which is arranged toward a first upper inlet (3) of said tank, is provided with a first axial hole (17) formed at the free end and with second lateral holes (18), which face said plate (16) that is adjacent to them and are arranged alternately close to one end or the other end of said at least one second perforated duct (15).

6. The tank according to claims 1 and 5, **characterized in that** it comprises third holes (19), which are provided laterally to the surface of said first duct (10) and face the bottom (2a) of said tank (2), fourth holes (19a) being provided in the end face at the free tip of said at least one first duct (10).

7. The tank according to claims 1 and 6, **characterized in that** it has, in a lower region, a third inlet (20) for connection between said scraper shaft (9) and a compressed air circuit (21), on said bottom (9a) there being first lower outlets (23), each of which is connected to at least one dosage duct (24) which has a conical shape with the vertex directed away from said bottom (9a) and connected to a loading hopper (25), which in turn is connected to a supply duct (26) which leads to an oven.

8. The tank according to claims 1 and 7, **characterized in that** a cylindrical nozzle (28) is associated with said at least one dosage duct (24) on the lateral surface (27) on which the fuel is conveyed and has two diverging conical and diametrically opposite holes (29), which direct the air onto the lateral surface (27), creating a vortical motion that strikes the fuel as it falls.

9. The tank according to claims 1 and 8, **characterized in that** said nozzle (28) has a central duct (30), which is connected to said diverging conical holes (29) and to said compressed air circuit (21), the flow-rate of air or gas of said nozzle (28) being adjusted by means of at least one first electric valve (31) and said scraper shaft (9) being connected to said compressed air circuit (21) by means of a flanged coupling (34), which also fastens said blade (14) and is connected to a hermetic rotary coupling (35).

10. The tank according to claims 1 and 9, **characterized in that** the inflow of the air in said scraper shaft (9) is managed by a high-pressure control duct (36), which is connected in parallel to a low-pressure control duct (37), both of which are connected to said compressed air circuit (21), said high-pressure control duct (36) having, in series, a second pressure regulator (38), a second electric valve (39) and a second check valve (40), said low-pressure control duct (37) having, in series, a third pressure regulator (41), a third electric valve (42) and a third check valve (43).

11. The tank according to claims 1 and 10, **characterized in that** it is pressurized by means of a compressor or a blower (44), which is also connected to a second upper inlet (4), which also supplies said supply ducts (26), the supply of fuel to said tank (2) occurring by means of a second loading hopper (45), which lies above said tank (2) and is connected to said first upper inlet (3), a hemispherical valve (46) and a guillotine valve (47) being interposed between said second loading hopper (45) and said tank (2).
